(19) **Europäisches Patentamt**
**European Patent Office**
**Office européen des brevets**

(11) **EP 2 565 623 B1**

(12) **FASCICULE DE BREVET EUROPEEN**

(45) Date de publication et mention
de la délivrance du brevet:
**26.07.2017 Bulletin 2017/30**

(51) Int Cl.:
**G01N 21/25** *(2006.01)*  **G01N 21/77** *(2006.01)*
**G01N 21/64** *(2006.01)*

(21) Numéro de dépôt: **12182072.4**

(22) Date de dépôt: **28.08.2012**

(54) **Dispositif de mesure optique de materiaux, utilisant un multiplexage de la lumiere**

Vorrichtung zur optischen Messung von Materialien anhand eines Multiplexverfahrens von Licht

Device for optically measuring materials using light multiplexing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.09.2011 FR 1157810**

(43) Date de publication de la demande:
**06.03.2013 Bulletin 2013/10**

(73) Titulaire: **Commissariat à l'Énergie Atomique
et aux Énergies Alternatives
75015 Paris (FR)**

(72) Inventeurs:
• **Perraut, François
38134 Saint-Joseph-de-Rivière (FR)**
• **Grateau, Henri
38450 Le Gua (FR)**

(74) Mandataire: **Ilgart, Jean-Christophe et al
BREVALEX
95, rue d'Amsterdam
75378 Paris Cedex 8 (FR)**

(56) Documents cités:
WO-A1-2006/135306    US-A- 5 779 978
US-A1- 2004 008 393    US-A1- 2004 252 943
US-B2- 7 911 700

• LIN YUAN-YU ET AL: "Integration of polymer
light-emitting diode and polymer waveguide on
Si substrate", APPLIED PHYSICS LETTERS, AIP,
AMERICAN INSTITUTE OF PHYSICS, MELVILLE,
NY, US, vol. 89, no. 6, 7 août 2006 (2006-08-07),
pages 63501-063501, XP012088434, ISSN:
0003-6951, DOI: 10.1063/1.2219718

EP 2 565 623 B1

**Description**

**DOMAINE TECHNIQUE**

La présente invention concerne un dispositif de mesure optique de matériaux, utilisant un multiplexage de la lumière.

Elle s'applique notamment à la mesure optique d'échantillons liquides ou gazeux, susceptibles de contenir des analytes, c'est-à-dire des molécules, ou des séquences chimiques ou biologiques déterminées, ou encore des micro-organismes, auxquels on s'intéresse.

Dans l'invention, on utilise un multiplexage de la lumière. En effet, on utilise le même détecteur optique, ou photodétecteur, pour mesurer des échantillons qui sont placés dans des zones distinctes.

Les mesures optiques, effectuées au moyen de l'invention, peuvent être notamment des mesures de transmission ou d'absorption, des mesures de diffusion, ou des mesures de photoluminescence, pour des couches minces ou épaisses de liquides ou de gaz.

**ÉTAT DE LA TECHNIQUE ANTÉRIEURE**

On connaît déjà divers dispositifs de mesure optique d'échantillons, utilisant un multiplexage de la lumière.

Certains dispositifs connus utilisent un déplacement relatif des échantillons, à l'aide de moyens mécaniques, par rapport à un ensemble comprenant une source lumineuse et un photodétecteur. Et avec ces dispositifs, on mesure séquentiellement les réponses optiques respectives des échantillons.

Dans d'autres dispositifs connus, une source de lumière éclaire simultanément tous les échantillons. Chacun de ceux-ci est associé à une première extrémité d'une fibre optique qui récupère la lumière issue de l'échantillon.

Les deuxièmes extrémités de l'ensemble des fibres optiques ainsi utilisées sont successivement connectées à une fibre optique auxiliaire qui est déplacée par des moyens mécaniques en vue de ces connexions successives. Cette fibre optique auxiliaire transmet les lumières qu'elle récupère successivement à un même photodétecteur.

Dans d'autres dispositifs connus, une source de lumière éclaire encore simultanément tous les échantillons. Un système optique approprié projette l'image des échantillons sur un photodétecteur constitué d'une matrice de photosites. En variante, il comporte un unique photosite et l'on prévoit une matrice à transparence programmable entre les échantillons et le photosite.

Un autre dispositif est connu par le document [1] suivant auquel on se reportera :

E. Schultz et al., Biosensors and Bioelectronics, Vol. 23 (2008), pages 987 à 994.

Dans cet autre dispositif connu, des sources optiques sont respectivement placées devant les échantillons et sont allumées de façon séquentielle. Les lumières respectivement issues des échantillons sont captées par une lame de verre dont les faces sont polies. La mesure est effectuée à l'aide d'un photodétecteur, en synchronisme avec la séquence d'allumage.

Le couplage lumière-lame de verre ne se produit que pour certaines interactions de la lumière avec les échantillons, par exemple une interaction de type fluorescence. De plus, les échantillons doivent être minces : leur épaisseur doit être inférieure à la longueur d'onde d'émission des composés fluorescents qui constituent les échantillons ou sont inclus dans ces derniers. Dans ce cas, la lumière pénètre de façon naturelle dans la lame par couplage évanescent, ou couplage en champ proche.

Avec ce type de couplage, la quantité de lumière qui pénètre dans la lame décroît de façon exponentielle avec la distance des fluorophores à la surface de la lame. De ce fait, le dispositif connu par le document [1] est mal adapté à l'analyse d'échantillons constitués de couches épaisses.

Plus précisément, si l'épaisseur d'un échantillon analysé est supérieure à 10 $\lambda$, où $\lambda$ est la longueur d'onde de la lumière de fluorescence, l'énergie lumineuse qui pénètre dans la lame devient très faible et peut difficilement être détectée.

Ce dispositif connu est donc mal adapté à des mesures de transmission, de diffusion ou de fluorescence, effectuées sur des échantillons épais, qui peuvent être gazeux, liquides, solides ou sous forme de poudres.

En effet, pour des mesures de transmission, un échantillon ne possède aucune source pour réémettre la lumière : cette dernière est absorbée, ou non, par l'échantillon et l'on mesure seulement la fraction de lumière qui n'a pas interagi avec cet échantillon.

Pour des mesures d'échantillons diffusants, on peut considérer que la lumière est réémise par les molécules composant l'échantillon et constituant des sources secondaires ; mais seules celles qui sont présentes dans une couche de faible épaisseur contribuent à engendrer un signal mesurable. Ce dernier est alors très faible par rapport au signal total.

Il convient d'ailleurs de noter que lorsque la pénétration d'un analyte dans une couche épaisse a lieu sur une faible épaisseur, la lumière est diffusée loin de la surface de la lame de verre, de sorte que le couplage évanescent ne peut se produire.

Le même raisonnement est applicable à des échantillons fluorescents épais : seuls les fluorophores dont la distance à la surface de la lame de verre est inférieure à 10$\lambda$, où $\lambda$ est la longueur d'onde de la lumière de fluorescence, contribuent à fournir un signal mesurable.

Les documents WO 2006/135306 et US 2004/0008393 divulguent des dispositifs de mesure de fluorescence, où la lumière émise par un matériau pénètre dans une lame transparente grâce à une surface structurée de la lame.

## EXPOSÉ DE L'INVENTION

La présente invention a pour but de remédier aux inconvénients précédents.

Elle permet d'effectuer des mesures optiques sur des plots, comportant des matériaux capteurs qui absorbent ou diffusent la lumière ou qui sont des échantillons fluorescents, et dont les épaisseurs peuvent être supérieures à la longueur d'onde du rayonnement détecté.

Pour ce faire, la présente invention utilise un couplage forcé de la lumière utilisée pour la mesure, à l'aide de coupleurs appropriés.

De façon précise, la présente invention a pour objet un dispositif selon la revendication 1. Selon un mode de réalisation préféré de l'invention, le guide de lumière est multimode.

Le dispositif, objet de l'invention, peut comprendre une pluralité de plots.

Selon un mode de réalisation particulier de l'invention, le dispositif comprend en outre un photodétecteur pour détecter la lumière transportée par le guide de lumière, ce photodétecteur étant placé face à la tranche du guide de lumière.

Selon un mode de réalisation préféré du dispositif, objet de l'invention, l'épaisseur du guide de lumière est comprise dans l'intervalle allant de 50 $\mu$m à 10 mm, de préférence de 500 $\mu$m à 5 mm.

Avantageusement, le diffuseur est disposé, au moins en partie, sur la face du guide de lumière la plus proche du matériau.

Dans l'invention, le diffuseur a une forme annulaire et délimite ainsi une zone du guide de lumière, et l'aire de la zone du guide de lumière est supérieure ou égale à l'aire de la section transversale de la partie de faisceau lumineux incident au matériau.

Selon un mode de réalisation particulier de l'invention, le diffuseur est en deux parties qui ont la même taille et sont respectivement situées sur deux faces opposées du guide de lumière.

Selon un mode de réalisation particulier de l'invention, le diffuseur est en deux parties qui ont des tailles différentes et sont respectivement situées sur deux faces opposées du guide de lumière.

De préférence, le diffuseur est constitué par une zone rugueuse superficielle du guide de lumière, dont la rugosité arithmétique est comprise dans l'intervalle allant de 100 nm à 50 $\mu$m. Cela permet de privilégier la diffusion élastique de la lumière par rapport au phénomène de diffraction. Autrement dit, avec une telle rugosité, la déviation de la lumière dans le guide s'effectue principalement par diffusion élastique. Cela constitue une solution plus simple par rapport à l'utilisation de réseaux de diffraction. Ainsi, par « diffuseur », on entend un élément apte à dévier une lumière qu'il reçoit par diffusion.

Selon un mode de réalisation particulier de l'invention, le guide de lumière constitue le support transparent et comporte ainsi la zone destinée à recevoir le plot, cette zone étant placée en regard du diffuseur.

Selon un mode de réalisation particulier, le dispositif, objet de l'invention, comprend une source de lumière principale et au moins un élément optique à transparence variable qui est apte à recevoir la lumière de la source de lumière principale et à constituer alors la source lumineuse.

Selon un mode de réalisation, le dispositif comporte une pluralité de matériaux, destinés à être éclairés, de préférence successivement, par une source. A chaque matériau est alors associé un diffuseur qui permet de dévier, dans le guide de lumière, la lumière émise par le plot ou, plus précisément, le matériau inclus dans le plot, sous l'effet de l'éclairement par la source.

Un matériau peut être un matériau capteur, c'est-à-dire un matériau dont les propriétés optiques évoluent lorsqu'il est placé en contact d'un analyte.

Le dispositif, objet de l'invention, peut comprendre une pluralité de matériaux et en outre un ensemble de puits qui sont respectivement destinés à recevoir les matériaux, chaque puits étant respectivement placé en regard d'un diffuseur.

## BRÈVE DESCRIPTION DES DESSINS

La présente invention sera mieux comprise la lecture de la description d'exemples de réalisation donnés ci-après, à titre purement indicatif et nullement limitatif, en faisant référence aux dessins annexés sur lesquels :

- la figure 1A est une vue en coupe schématique d'un premier mode de réalisation particulier du dispositif, objet de l'invention, qui utilise plusieurs sources lumineuses et dans lequel des plots et des éléments de couplage sont sur une même lame,
- la figure 1B est une vue en coupe schématique d'un autre mode de réalisation particulier, qui utilise une seule source lumineuse et une matrice à transparence variable,

- la figure 2 est une vue en coupe schématique d'un autre mode de réalisation particulier, dans lequel les plots et les éléments de couplage sont placés sur deux lames support différentes,
- la figure 3 est une vue en coupe schématique d'un autre mode de réalisation particulier, qui utilise une chambre à circulation et dans lequel les éléments de couplage ne sont pas réalisés dans cette chambre,
- la figure 4 est une vue en coupe schématique d'un autre mode de réalisation particulier, dans lequel des matériaux sont placés dans des puits,
- la figure 5 est une vue en coupe schématique d'un autre mode de réalisation particulier, utilisant des puits qui communiquent par des traversées,
- la figure 6 illustre schématiquement le principe de la déviation des rayons lumineux par un diffuseur que l'on peut utiliser dans l'invention,
- les figures 7A et 7B illustrent schématiquement une configuration utile à la compréhension de l'invention et qui permet de mesurer la diffusion de la lumière par diminution de la quantité de lumière parvenant à un photodétecteur,
- les figures 8A et 8B illustrent schématiquement une autre configuration que l'on peut utiliser dans l'invention et qui permet de mesurer la diffusion de la lumière par augmentation de la quantité de lumière parvenant au photodétecteur,
- les figures 9A et 9B illustrent schématiquement deux exemples de diffuseurs utiles à la compréhension de l'invention, à savoir un diffuseur en deux parties symétriques (figure 9A) et un diffuseur en deux parties dissymétiques, réalisées en vis-à-vis (figure 9B),
- les figure 10A et 10B sont des vues schématiques de dispositifs de mesure,
- la figure 11 représente le profil d'une surface dépolie d'une lame de verre, ce profil correspondant aux résultats d'une mesure effectuée à l'aide d'un profilomètre (en $\mu$m) en fonction de la position le long de la surface (en $\mu$m), et
- la figure 12 représente deux spectres de transmission en fonction de la longueur d'onde (en nm) de la lumière transmise par un plot.

## EXPOSÉ DÉTAILLÉ DE MODES DE RÉALISATION PARTICULIERS

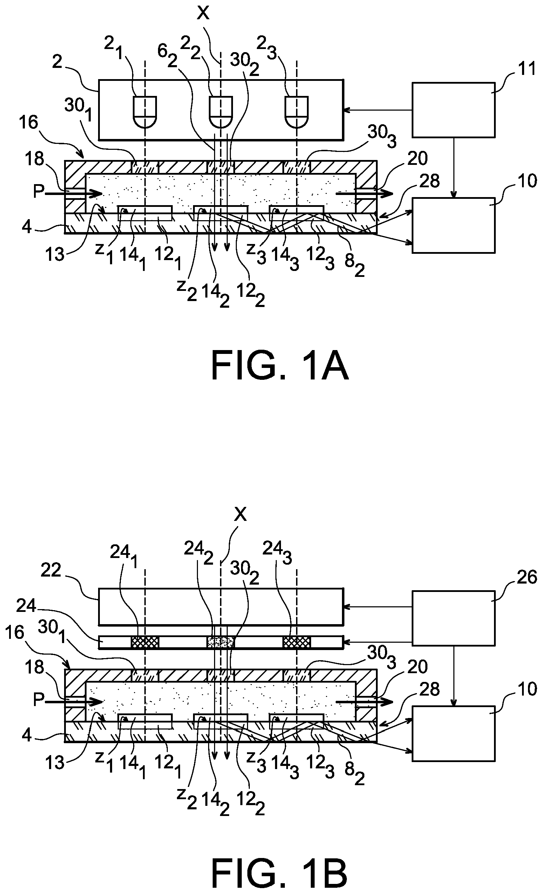

La figure 1A est une vue en coupe schématique d'un mode de réalisation particulier du dispositif de mesure optique, objet de l'invention.

Le dispositif schématiquement représenté sur la figure 1A est destiné à mesurer optiquement des plots. Il comprend un ensemble 2 de sources lumineuses. Seules les sources lumineuses $2_1$, $2_2$, $2_3$ sont représentées sur la figure 1A.

Le dispositif de la figure 1A comprend aussi un support transparent 4, comportant des zones, appelées « zones d'interrogation », qui sont destinées à recevoir respectivement les plots. Les sources lumineuses sont respectivement associées à ces zones.

Chaque source lumineuse est prévue pour émettre un faisceau lumineux en direction de la zone qui lui est associée. Seul le faisceau lumineux $6_2$, émis par la source $2_2$, est représenté sur la figure 1A et l'axe de ce faisceau lumineux a la référence X.

Chaque plot interagit avec la lumière qu'il reçoit de la source lumineuse lui correspondant.

D'une façon générale, un plot comporte un matériau, et notamment un matériau capteur, dont les propriétés optiques sont susceptibles d'évoluer lorsqu'il est mis en contact d'un analyte.

Ainsi, lorsqu'un fluide, par exemple un gaz ou un liquide, s'écoule au contact du plot, et que le fluide comporte un analyte auquel le matériau capteur est sensible, le plot, grâce au matériau capteur qu'il contient, subit une modification de ses propriétés optiques.

Par « modification des propriétés optiques », on entend une émission d'une lumière de fluorescence, un changement de couleur, une modification de l'absorption.

Le dispositif de la figure 1A comprend en outre un guide de lumière pour transporter une partie du faisceau lumineux qui résulte de l'interaction de chaque plot avec la lumière qu'il a reçue.

Par exemple, on voit sur la figure 1A la lumière $8_2$ transportée par le guide de lumière, à la suite de l'interaction d'un plot avec le faisceau lumineux $6_2$.

Dans l'exemple représenté sur la figure 1A, le guide de lumière constitue le support transparent 4 et comporte ainsi les zones, telles que les zones $z_1$, $z_2$, $z_3$, qui sont destinées à recevoir respectivement les plots.

Le dispositif de la figure 1A comprend aussi :

- un photodétecteur 10 pour détecter une partie de la lumière transportée par le guide de lumière 4, et
- des moyens 11 de commande des sources lumineuses, pour allumer puis éteindre les sources les unes après les autres, de manière à détecter successivement les lumières correspondant respectivement aux divers plots, et donc lire le support comportant les diverses zones d'interrogation.

De préférence, les moyens de commande 11 sont prévus pour allumer puis éteindre séquentiellement les sources lumineuses, en synchronisant l'allumage-extinction de chaque source avec la mesure de la lumière correspondante, effectuée par le photodétecteur 10.

Les sources lumineuses peuvent être choisies parmi des diodes électroluminescentes, des fibres optiques reliées, des diodes laser.

Le guide de lumière 4 est le plus souvent un guide de lumière multimode. Il comprend un ensemble d'éléments de couplage, lesquels sont respectivement associés aux sources lumineuses et constituent des diffuseurs de lumière.

Chaque diffuseur de lumière est apte à faire pénétrer, dans le guide de lumière multimode 4, une partie du faisceau lumineux qui résulte de l'interaction du plot correspondant avec la lumière qu'il a reçue.

Les diverses zones d'interrogation sont placées respectivement en regard des diffuseurs. Parmi ces derniers, seuls les diffuseurs $12_1$, $12_2$, $12_3$, correspondant respectivement aux sources $2_1$, $2_2$, $2_3$, sont représentés sur la figure 1A.

Dans l'exemple de la figure 1A, le guide de lumière multimode 4 est une lame à faces parallèles, par exemple en verre, en silice, en quartz, ou en plastique, dont l'épaisseur est comprise entre 50 $\mu$m et 10 mm, de préférence entre 500 $\mu$m et 5 mm. L'une des deux faces de la lame, à savoir la face 13, se trouve en regard de l'ensemble 2 des sources lumineuses et au contact des plots capteurs $14_1$, $14_2$ et $14_3$. L'ensemble des diffuseurs est formé au niveau de cette face 13.

En outre, le dispositif de la figure 1A utilise un ensemble de plots sensibles à des analytes, ces derniers pouvant être des composés biologiques ou chimiques. Ces plots, qui peuvent renfermer différents matériaux capteurs, sensibles à différents analytes, sont respectivement disposés sur les zones d'interrogation qui se trouvent sur la face 13, respectivement au-dessus des diffuseurs. Seuls les plots $14_1$, $14_2$, $14_3$ sont représentés sur la figure 1A.

Comme précédemment exposé, l'exposition de ces plots aux composés biologiques ou chimiques modifie leurs propriétés optiques. Cette modification entraîne une variation de la quantité de lumière transmise, ou une variation de la quantité de lumière diffusée, ou encore une variation de la fluorescence de ces plots. Ces variations peuvent être positives ou négatives.

Ces plots sont exposés à une partie P d'un fluide (liquide ou gaz), susceptible de contenir les composés, ou analytes, que l'on souhaite détecter ou doser. Pour ce faire, la lame 4 est éventuellement placée dans une chambre à circulation 16 qui est munie d'un orifice 18, prévu pour l'entrée de cette partie P de fluide dans la chambre, et d'un autre orifice 20, prévu pour la sortie de la partie P de fluide de la chambre.

Dans l'exemple de la figure 1A, chaque échantillon est constitué par un matériau sensible qui est exposé au fluide.

Chaque source lumineuse est associée à un unique diffuseur et le couple constitué par ce dernier et la source lumineuse correspondante est lui-même associé à un unique plot, disposé sur la zone d'interrogation qui fait face à la source lumineuse associée.

A titre d'exemple, la source $2_2$ est associée au diffuseur $12_2$ et au plot $14_2$.

Dans le cas de la figure 1A, seule la source lumineuse $2_2$ est allumée et la zone d'interrogation correspondante, portant le plot $14_2$, est interrogée.

Les matériaux capteurs peuvent être des polymères poreux ou des sol-gels, par exemple décrits dans la demande WO 2007/031657 et dans **l'article de** R. Dagnelie et al., "Méthodes de mesure du formaldéhyde dans l'atmosphère", Revue Air Pur N° 74, pages 14-21**.**

On notera que l'invention s'applique d'autant mieux que le plot comportant le matériau capteur est volumique et non pas surfacique.

Dans un autre mode de réalisation particulier de l'invention, schématiquement illustré par la figure 1B, on utilise une source lumineuse unique 22 qui est apte à éclairer toute la face 13 de la plaque 4, portant les plots.

On intercale, entre la source 22 et l'ensemble des zones d'interrogation, une matrice à transparence variable 24, comprenant un ensemble d'éléments optiques à transparence variable. Seuls les éléments $24_1$, $24_2$, $24_3$, sont représentés sur la figure 1B. A ce sujet, on se reportera au document suivant :

U.S. Patent 7,064,893 Boutet et al.

Les éléments optiques à transparence variable reçoivent tous la lumière de la source 22 et sont aptes à constituer des sources lumineuses équivalentes aux sources lumineuses de la figure 1A.

Pour ce faire, dans le cas du dispositif de la figure 1B, on remplace les moyens de commande 11 de la figure 1A par des moyens de commande 26 prévus pour commander l'allumage de la source 22 et pour rendre séquentiellement transparents puis opaques les éléments optiques de la matrice, en synchronisant la transparence-opacité de chaque élément avec la mesure de la lumière correspondante, effectuée par le photodétecteur 10.

Par exemple, dans le cas de la figure 1B, la matrice 24 est commandée pour rendre tous ses éléments opaques sauf l'élément $24_2$ qui laisse alors passer la lumière de la source 22 vers le plot correspondant $14_2$ et constitue ainsi (en association avec la source 22) une source équivalente à la source $2_2$ de la figure 1A.

Revenons à cette figure 1A. La lumière provenant des sources lumineuses est, si nécessaire, optiquement mise en forme par l'intermédiaire de composants optiques appropriés (non représentés), par exemple des lentilles, des filtres, ou des fibres optiques.

Après avoir traversé un plot, par exemple le plot $14_2$, qui est placé en face d'une source allumée, par exemple de la source $2_2$, la lumière atteint le diffuseur correspondant $12_2$, placé à la surface de la lame 4. Une fraction de la lumière couplée grâce à ce diffuseur $12_2$ se propage alors dans la lame 4 par réflexion totale et émerge de cette dernière par la tranche, plus précisément par les côtés de la lame, comme on le voit sur la figure 1A.

Par « placé à la surface de la lame », on entend que le diffuseur est disposé au contact de la lame ou distant de cette dernière d'une distance inférieure à la longueur d'onde émise par la source (ou de la longueur d'onde maximale lorsque l'éclairement produit par la source n'est pas monochromatique).

Le photodétecteur 10 est placé devant l'un 28 des côtés de la lame et fournit un signal électrique représentatif du flux lumineux qui lui parvient, à des moyens électroniques de traitement appropriés (non représentés).

Un système optique (non représenté), pour mettre en forme des rayons lumineux qui émergent de la lame 4, peut-être disposé entre le côté de sortie 28 et le photodétecteur 10. Ce système est par exemple composé de lentilles, de filtres ou de fibres optiques.

Le photodétecteur 10 peut comprendre un unique élément photosensible, ou photosite (par exemple un phototransistor ou une photorésistance ou un photomultiplicateur), ou comprendre une matrice de photosites (par exemple un capteur d'image pixellisé ou une barrette de photodiodes), ou peut même être constitué par un spectrophotomètre.

Dans le cas de l'utilisation d'une matrice de photosites, on peut rendre celle-ci équivalente à un photosite unique, en faisant la somme des signaux fournis par tous les photosites, soit *a posteriori* par une procédure logicielle ou électrique, soit au niveau du photodétecteur lui-même (technique de « *binning* »). On peut aussi utiliser la matrice de photosites pour faire une mesure spectrale.

Dans l'exemple de la figure 1A, la chambre de circulation 16 est fermée, du côté faisant face aux sources lumineuses du dispositif, par une paroi opaque. De l'autre côté, la chambre est fermée par la lame transparente 4. Des fenêtres optiques transparentes, telles que les fenêtres $30_1$, $30_2$, $30_3$, sont alors prévues dans la paroi opaque, respectivement en regard des sources lumineuses.

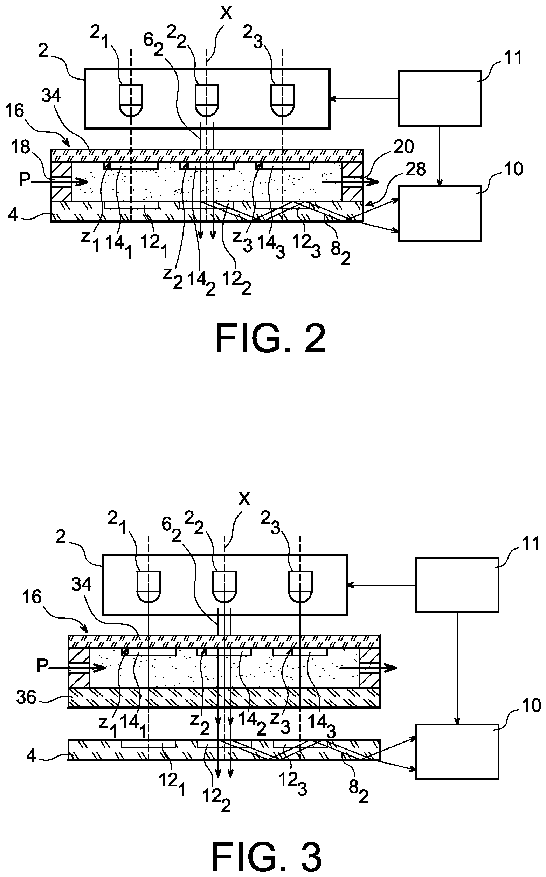

En variante, la chambre de circulation peut être fermée par deux lames transparentes. Dans l'exemple de la figure 2, l'une de ces lames est la lame 4, comme précédemment ; et l'autre lame 34 se trouve en regard des sources, et remplace ainsi la paroi opaque mentionnée ci-dessus.

Dans l'exemple de la figure 1A, les plots sont placés directement sur les diffuseurs de lumière.

Dans un autre exemple, schématiquement illustré par la figure 2, les plots sont placés sur un premier support transparent qui est constitué par une lame transparente 34 dans l'exemple représenté, tandis que les diffuseurs sont placés sur un deuxième support transparent, à savoir la lame 4 (constituant le guide de lumière).

Dans un autre exemple de l'invention, schématiquement illustré par la figure 3, les diffuseurs sont toujours placés sur la lame 4 (constituant le guide de lumière) mais cette dernière est dissociée de la chambre à circulation 16 dans laquelle se trouvent les plots.

Comme on le voit sur la figure 3, la chambre à circulation est délimitée par la lame transparente 34 et par une autre lame transparente 36 ; et la lame 4 comportant les diffuseurs, est placée en regard de cette lame 36, à l'extérieur de la chambre de circulation.

Ce mode de réalisation permet à l'ensemble 12 des diffuseurs d'être installé à demeure.

La chambre à circulation 16 est conçue en fonction du produit que l'on veut analyser. Dans certains cas, une partie P de ce produit (sous forme liquide ou gazeuse) est placée dans cette chambre, comme le montrent les figures 1A, 1B et 2, et peut réagir avec les plots déposés sur les zones d'interrogation.

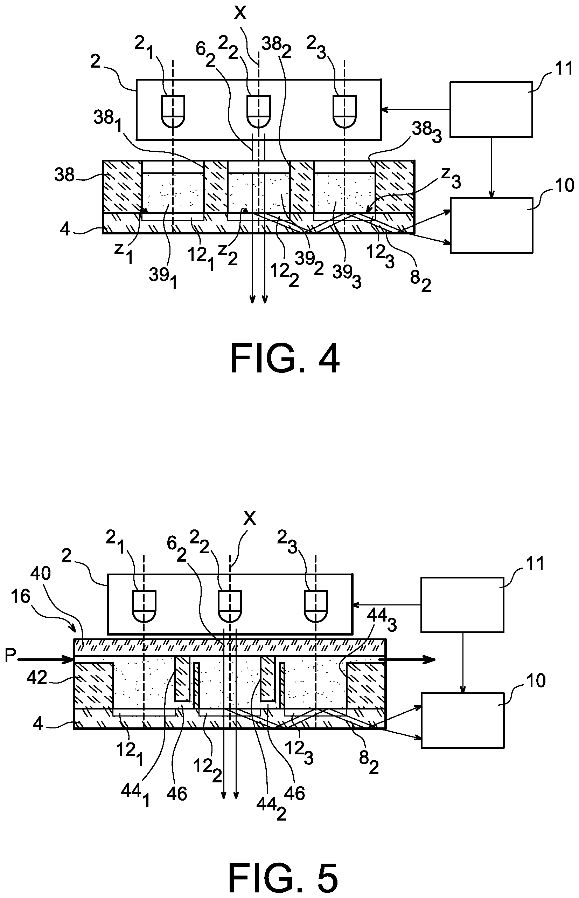

Il est également possible d'analyser plusieurs produits différents avec un même dispositif conforme à l'invention. L'exemple schématiquement représenté sur la figure 4 illustre cette possibilité.

Dans cet exemple, on utilise un ensemble 38 de puits, par exemple du genre des plaques de microtitrage. Seuls les puits $38_1$, $38_2$, $38_3$ sont représentés.

On place l'ensemble de puits (dont les fonds respectifs sont transparents) sur la lame 4 (constituant le guide de lumière) et donc en regard de l'ensemble 2 des sources lumineuses.

Les tailles et les positions relatives des puits sont telles que chaque puits soit en regard d'un diffuseur, comme on le voit sur la figure 4.

Les produits, sous forme liquide ou solide, ou sous forme de films poreux ou sol-gel, sont disposés dans les puits dans lesquels on a préalablement placé les matériaux sensibles (non représentés). Les réactions entre les produits et les matériaux sensibles ont alors lieu. On obtient ainsi un ensemble d'échantillons tels que les échantillons $39_1$, $39_2$, $39_3$. On analyse ces échantillons comme on l'a expliqué plus haut. Ainsi, selon ce mode de réalisation, un plot est formé par le produit maintenu dans un puits.

En variante, les réactions entre les produits et les matériaux sensibles peuvent avoir lieu avant l'introduction de ceux-ci dans les puits. Les échantillons résultant des réactions sont ensuite placés dans les puits et l'analyse est effectuée.

Un autre exemple de l'invention est schématiquement illustré par la figure 5.

Dans cet autre exemple, on réalise une chambre à circulation 16 dans laquelle une partie du produit P que l'on veut analyser est forcée de circuler, par exemple à l'aide d'une pompe (non représentée) ou sous l'effet du vide. La chambre de circulation est conçue de façon qu'en l'absence d'actionnement fluidique, le produit ne circule plus et que la diffusion des molécules composant ce produit soit la plus faible possible.

Comme on le voit sur la figure 5, la chambre à circulation 16 est délimitée par une lame transparente 40 et par la lame 4 (constituant le guide de lumière). La plaque 40 se trouve du côté de l'ensemble 2 des sources lumineuses.

Entre la lame 40 et la lame 4 on dispose une lame 42 dans laquelle est formé un ensemble de puits (dont les fonds respectifs sont transparents) parmi lesquels seuls les puits $44_1$, $44_2$, $44_3$ sont représentés.

Les puits de cet ensemble contiennent respectivement les matériaux sensibles (non représentés). En outre, les tailles et les dispositions des puits sont telles que chaque puits soit au-dessus d'un élément de couplage.

De même que dans le mode de réalisation représenté sur la figure 4, chaque puits délimite un plot, le plot étant formé par le produit P lorsqu'il remplit le puits.

Le passage de la quantité de produit P d'un puits à un autre est rendue possible grâce à des traversées, telles que les traversées 46, ménagées entre les puits. Ces traversées sont conçues de façon à laisser circuler le produit, lorsqu'il est déplacé par un actionneur fluidique (utilisant par exemple le vide ou une pompe), et à réduire la diffusion des molécules du produit d'un puits à l'autre lorsque l'actionneur est arrêté.

Dans ce qui suit, on revient sur les diffuseurs.

Dans l'invention, pour coupler la lumière ayant interagi avec un échantillon, on utilise un diffuseur qui modifie la trajectoire des rayons lumineux par suite de la réfraction de ces rayons. Parmi ces derniers, certains sont déviés à l'intérieur de la lame 4, avec des angles d'incidence tels que ces rayons se propagent par réflexion totale dans la lame et émergent par la tranche de celle-ci, ce qui permet la mesure optique au moyen d'un photodétecteur approprié.

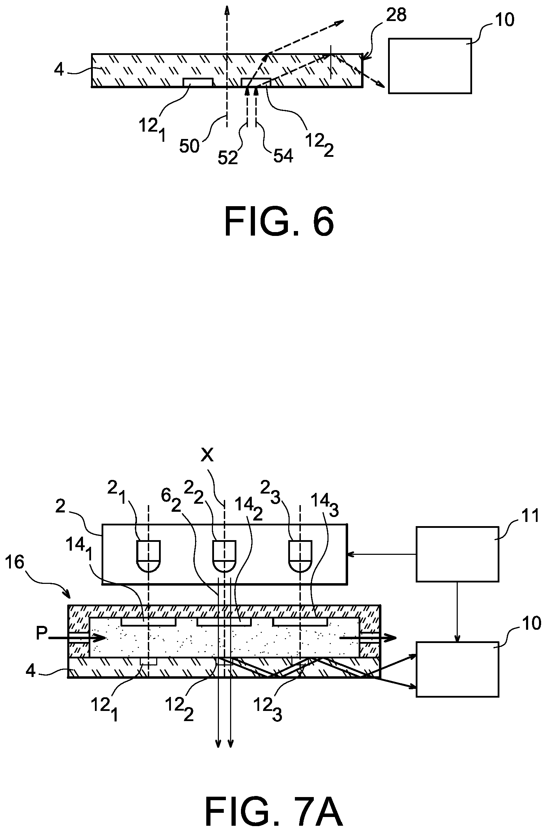

La figure 6 illustre schématiquement le principe de la déviation des rayons lumineux par un diffuseur.

On voit la lame 4, pourvue de diffuseurs tels que les diffuseurs $12_1$, $12_2$.

Le rayon lumineux 50 ne rencontre aucun diffuseur et sa direction n'est pas modifiée ; il traverse la lame 4 en sortant par la face opposée à la face d'entrée.

Le rayon lumineux 52 rencontre le diffuseur $12_2$ mais sa réfraction est insuffisante pour que son angle, après la face d'entrée, soit supérieur à l'angle limite de réflexion totale $\theta_C$. Ainsi, le rayon lumineux 52 traverse également la lame 4 en sortant par la face opposée à la face d'entrée.

Rappelons que l'angle $\theta_C$ est défini par la formule suivante :

$$\theta_C = \arcsin\ (n_2/n_1) \qquad\qquad (1)$$

où $n_1$ désigne l'indice de réfraction de la lame et $n_2$ l'indice de réfraction du milieu environnant cette lame.

Le rayon lumineux 54 rencontre le diffuseur $12_2$ et sa réfraction est suffisante pour que son angle, après la face d'entrée, soit supérieur à l'angle limite de réflexion totale $\theta_C$. Ce rayon 54 est couplé dans la lame 4 et émerge par l'un 28 des côtés de celle-ci. Il est alors capté par le photodétecteur 10 qui est disposé en regard de ce côté 28. En relation avec la présente invention, on peut effectuer la mesure, par deux techniques complémentaires, de la diffusion de la lumière par un plot épais.

La première technique, utile à la compréhension de l'invention, consiste à mesurer une réduction de la quantité de lumière transmise vers le photodétecteur 10 quand la diffusion de la lumière dans le plot augmente.

La seconde technique , qui au contraire caractérise l'invention, consiste à mesurer une augmentation de cette quantité de lumière tombant sur le photodétecteur 10 quand la diffusion de la lumière dans le plot augmente.

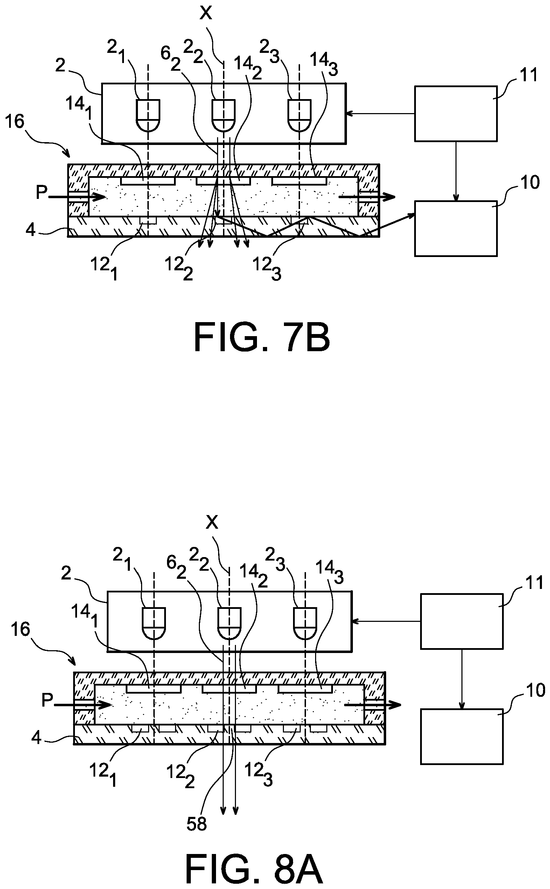

La première technique est schématiquement illustrée par les figures 7A et 7B (utilisant une configuration du genre de celle qui est illustrée sur la figure 2).

Sur ces figures 7A et 7B, chaque diffuseur, tel que le diffuseur $12_2$, est réalisé pour avoir une aire inférieure ou égale à l'aire de la section transversale du faisceau lumineux $6_2$ arrivant sur ce diffuseur.

Si le plot $14_2$ se trouvant sur la zone d'interrogation associée ne diffuse pas, toute la lumière traversant ce plot arrive sur le diffuseur $12_2$ et un premier niveau de lumière est mesuré par le photodétecteur 10 (figure 7A).

Au contraire, si le plot $14_2$ diffuse, la lumière est déviée et la quantité de lumière arrivant sur le diffuseur $12_2$

est plus faible. On mesure alors un deuxième niveau de lumière qui est inférieur au premier niveau (figure 7B).

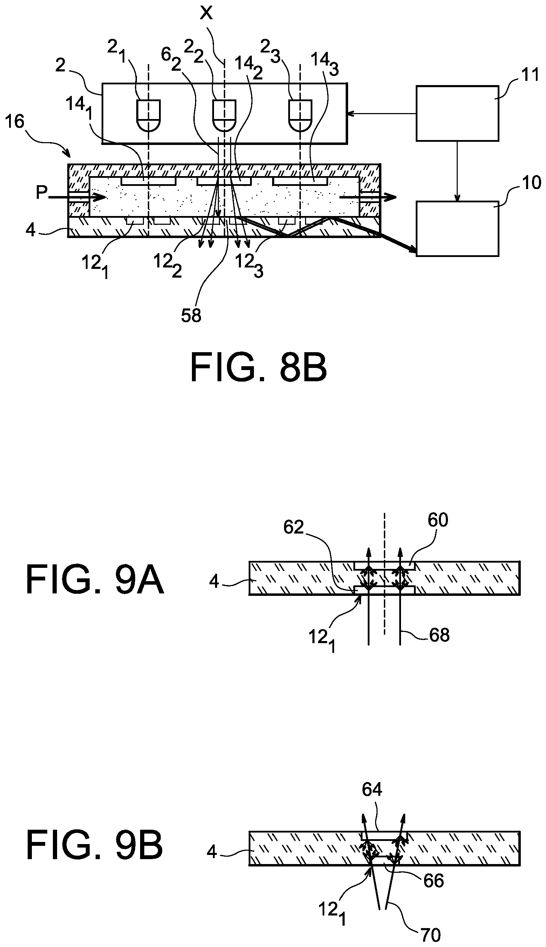

La deuxième technique est schématiquement illustrée par les figures 8A et 8B (utilisant aussi une configuration du genre de celle qui est illustrée par la figure 2).

Sur ces figures 8A et 8B, chaque diffuseur, tel que le diffuseur $12_2$, est réalisé pour avoir la forme d'un anneau (diffuseur) qui entoure, ou délimite, une zone centrale 58 de la lame 4 (comportant les diffuseurs) ; et cette zone centrale 58, quant à elle, ne constitue pas un diffuseur.

En outre, chaque diffuseur, tel que le diffuseur $12_2$, est formé de façon que l'aire du disque qu'il délimite soit supérieure ou égale à l'aire du faisceau lumineux $6_2$ arrivant sur ce diffuseur.

Si le plot $14_2$ disposé sur la zone d'interrogation associée ne diffuse pas, toute la lumière le traversant arrive sur la zone centrale 58 du diffuseur, et un premier niveau de lumière est mesuré (figure 8A).

Au contraire, si le plot $14_2$ diffuse, la lumière est déviée et une partie de cette lumière atteint l'anneau 58 qui laisse pénétrer la lumière dans la lame 4. On mesure alors un deuxième niveau de lumière qui est supérieur au premier niveau (figure 8B).

Dans l'invention, les diffuseurs utilisés sont de préférence constitués par des zones rugueuses superficielles, formées à la surface du guide de lumière et forment donc des surfaces diffusantes.

La forme et les paramètres géométriques de chaque surface diffusante sont définis selon, d'une part, la directivité de la source lumineuse associée et, d'autre part, la quantité de lumière couplée, nécessaire pour réaliser une mesure de référence précise.

Le dispositif, objet de l'invention, repose également sur l'association de chaque zone d'interrogation à un diffuseur discret.

Si l'on utilisait un diffuseur formé sur l'ensemble de la lame constituant le guide de lumière, le phénomène de réflexion totale interne, qui est à l'origine du guidage de la lumière, serait fortement atténué et le dispositif ne pourrait plus fonctionner correctement car la lumière se découplerait au cours de sa propagation.

Typiquement, la surface d'un diffuseur peut être comprise entre 0,5 et 10 fois la surface formée par le plot sur la lame, et de préférence entre 0,5 et 5 fois.

La quantité de lumière qui est couplée grâce à une surface diffusante est également fonction de la rugosité de cette surface. Cette rugosité, exprimée comme la rugosité arithmétique, notée Ra, dépend de la technique de fabrication de la surface diffusante.

La rugosité d'une surface de verre, de type lame de microscope, est environ égale à 2 nm ; elle est très inférieure aux longueurs d'ondes des lumières utilisables dans l'invention pour éclairer les échantillons ; et une telle surface ne diffuse pas assez de lumière pour que les mesures soient exploitables.

Par exemple, dans le domaine visible, avec une longueur d'onde $\lambda$ de 500 nm, une rugosité Ra de 2 nm, et une lame en verre de borosilicate, ayant un indice de réfraction $n_1$ égal à 1,523 et placée dans l'air (dont l'indice de réfraction $n_2$ est égal à 1), on trouve que l'intensité totale $I_C$ couplée dans la lame est égale à 0,01% de l'intensité $I_O$ de la lumière incidente. A ce sujet, on se reportera au document suivant :

J.M. Elson et al., "Relationship of the total integrated scattering from multilayercoated optics to angle of incidence, polarization, correlation-length, and roughness crosscorrelationproperties", Appl.Opt., 22, 3207 (1983*).*

Pour déterminer $I_C$, on utilise les formules suivantes :

$$R = \left[\frac{n_1 - n_2}{n_1 + n_2}\right]^2 = 0,04 \qquad (2)$$

$$D = R\left[\frac{4\pi\,Ra}{\lambda}\right]^2 \approx 10^{-4} \qquad (3)$$

$$I_C = D \times I_0 \qquad (4)$$

où R désigne le facteur de réflexion et D le facteur de diffusion.

Dans la présente invention, la surface est donc rendu diffusante en augmentant la rugosité Ra, selon la valeur souhaitée, par différentes techniques qui sont exposées plus loin.

La rugosité Ra, utilisée dans l'invention, est supérieure aux longueurs d'ondes des lumières que l'on peut utiliser pour éclairer les plots. Mais, pour être efficace, il est préférable que cette rugosité Ra soit comprise entre 100 nm et 50 $\mu$m, valeurs pour lesquelles l'équation (3) n'est d'ailleurs plus valable. Autrement dit, la rugosité doit être, de préférence, comprise entre le dixième de la longueur d'onde et 100 fois la longueur d'onde (ou longueur d'onde moyenne) émise par la source.

Par ailleurs, pour augmenter davantage la quantité de lumière couplée, il est possible de réaliser deux surfaces diffusantes en vis-à-vis, qui sont soit symétriques (figure 9A), soit dissymétriques (figure 9B).

Plus précisément, dans l'exemple utile à la compréhension de l'invention, qui est schématiquement et partiellement illustré par la figure 9A, chaque diffuseur, tel que le diffuseur $12_1$, est en deux parties 60, 62 ayant la même taille, situées en face l'une de l'autre, sur deux faces opposées de la lame 4 constituant le guide de lumière.

Et, dans l'exemple utile à la compréhension de l'invention, qui est schématiquement et partiellement illustré par la figure 9B, chaque diffuseur, tel que le diffuseur $12_1$, est en deux parties 64, 66 ayant des tailles différentes, situées en face l'une de l'autre, sur deux faces opposées de la lame 4.

Le choix entre ces deux possibilités est fait selon les résultats attendus, le type de source utilisé pour l'éclairement et la mise en forme du faisceau lumineux correspondant.

Par exemple, la configuration de la figure 9A est bien adaptée au cas où le faisceau de lumière incident 68 est collimaté ; tandis que la configuration de la figure 9B s'applique bien au cas où le faisceau de lumière incident 70 est divergent.

De nombreuses méthodes existent pour réaliser une surface diffusante à partir d'une surface lisse.

Il est possible de dépolir cette surface lisse par une attaque chimique, par exemple au moyen d'acide fluorhydrique, de bi-fluorure d'ammonium ou d'acide chlorhydrique. L'action de ces acides peut-être localisée, en déposant, sur la lame dont on veut dépolir la surface, des gouttes de tels acides aux endroits où l'on souhaite créer des zones dépolies.

Un fraisage à l'aide d'une fraise en diamant permet aussi d'obtenir une surface diffusante, de même qu'une érosion aux ultrasons, à l'aide d'un outil dont la forme correspond au motif recherché.

On peut également dépolir la surface en utilisant un liquide, contenant des particules en suspension, et un outil de forme adaptée.

Il est aussi possible de réaliser un microbillage de la surface après avoir protégé les parties de celle-ci que l'on ne veut pas dépolir.

Un exemple de cette dernière méthode est décrit ci-après.

On réalise tout d'abord un masque pour protéger les régions que l'on ne souhaite pas dépolir. Ce masque peut-être réalisé à l'aide d'un film adhésif (par exemple de type Arcare 90106, commercialisé par la société Adhesive Research) qui sera retiré après le microbillage. La découpe peut être réalisée avec un robot spécialisé (par exemple de type Craft Robo Pro E5000, commercialisé par la société Graphtec).

Le masque est ensuite positionné sur la lame de verre. Le microbillage peut être effectué avec une sableuse d'atelier et de petites billes de verres. Le diamètre des billes et les conditions de projection (pression du jet de sable, temps d'exposition) définissent la rugosité que l'on obtiendra pour la surface. Après la projection, le masque est retiré et la lame est nettoyée à l'aide d'un solvant adapté, par exemple l'éthanol, l'acétone ou l'isopropanol.

On peut également faire adhérer des films diffusants et transparents sur les zones de la surface où l'on veut former les diffuseurs, par exemple des films faits d'un polyester tel que le polyéthylène téréphtalate ou PET, qui sont semi-transparents et laiteux.

De nombreux diffuseurs, mis au point pour l'éclairage, sont également commercialement disponibles.

On peut également obtenir une déviation des rayons lumineux dans les régions choisies du support, par l'intermédiaire de micro-prismes ou de lentilles de Fresnel, réalisés par embossage dans ces régions, pour un support constitué par une lame transparente qui est faite d'une matière synthétique telle que le PMMA ou le polystyrène.

En variante, on peut faire adhérer au support un film comportant des microprismes et une structure de lentille de Fresnel. De nombreux produits de ce genre, mis au point pour l'éclairage, sont commercialement disponibles.

On donne dans ce qui suit un exemple d'utilisation de l'invention.

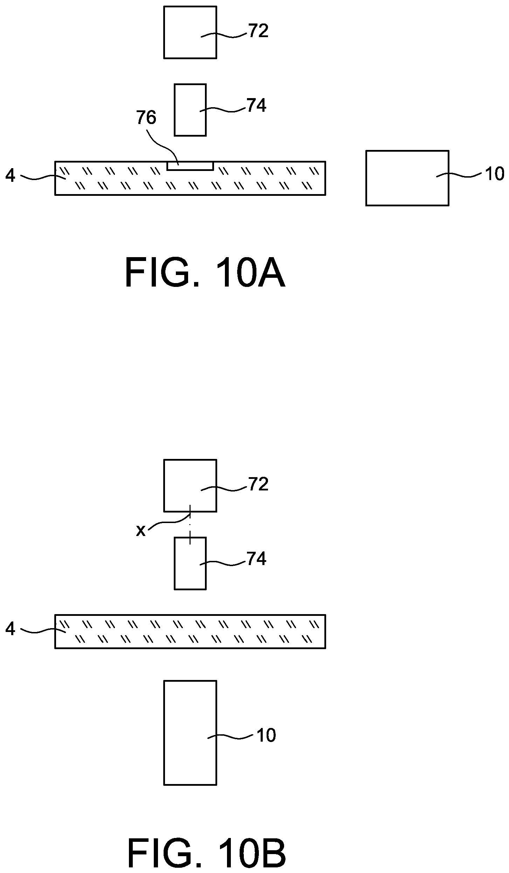

On utilise un dispositif de mesure qui est très schématiquement représenté sur la figure 10A.

Une source de lumière 72 éclaire un puits 74 formé par une ampoule transparente remplie d'éosine Cooper, placée au dessus (à quelques millimètres) d'une lame de microscope agissant en tant que guide de lumière multimode 4. L'éosine remplissant l'ampoule transparente constitue donc le plot.

La source de lumière 72 est constituée par l'extrémité de fibres optiques (toron de fibres optique, de diamètre 6 mm), dont l'autre extrémité est couplée à une lampe halogène (Volpi Intralux 6000).

Le guide de lumière 4 est une lame de microscope de surface 25 mm x 75 mm et d'épaisseur 1 mm. Ce guide de lumière comporte, sur une surface en vis-à-vis de l'ampoule d'éosine, un diffuseur 76 réalisé par microbillage selon un disque de diamètre 4 mm. Autrement dit, le diffuseur est ici un disque de verre dépoli formé à la surface de la lame 4.

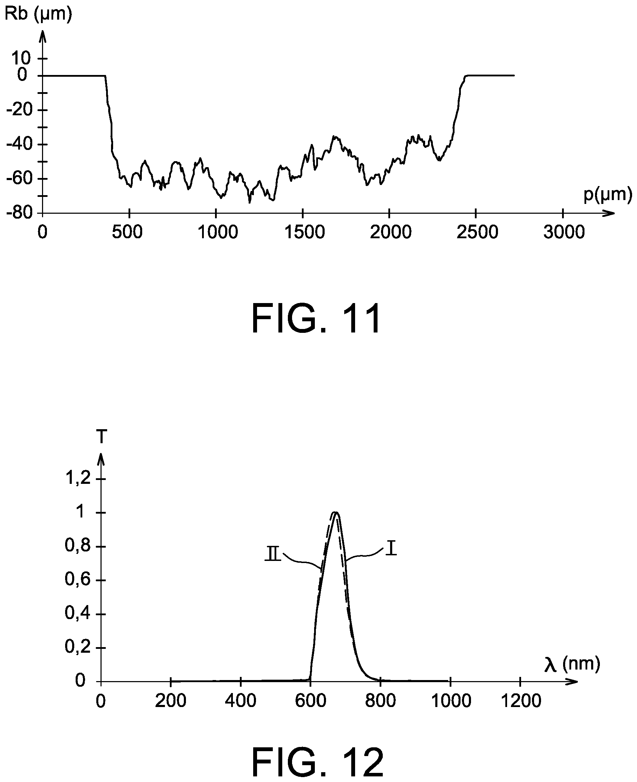

La figure 11 représente un profil de rugosité de ce diffuseur dépoli, réalisé avec un profilomètre KLA (Tencor) relié à un stylet formant une pointe de 60° d'angle au sommet, dont l'extrémité est arrondie (rayon 2 $\mu$m). Le profil est

obtenu par balayage de 2704 points espacés de 1,99 $\mu$m à la vitesse de 100 $\mu$m/s en appliquant une force de 2 mg.

En abscisses, on a porté la position $\underline{p}$ (en $\mu$m) et en ordonnées, on a porté la rugosité brute Rb (en $\mu$m). Sur la figure 11, la position du diffuseur correspond approximativement aux abscisses 400 $\mu$m à 2400 $\mu$m.

Le photodétecteur 10 est constitué d'une fibre optique polymère, connectée à un spectrophotomètre (Ocean Optics QE65000).

Ce photodétecteur 10 est placé face à la tranche de la lame de verre et l'on mesure le spectre de la lumière déviée par le diffuseur et se propageant jusqu'à la tranche du guide de lumière 4.

Dans une autre mesure, on utilise le montage représenté très schématiquement sur la figure 10B.

Les équipements utilisés sont similaires à ceux de l'exemple précédent, à l'exception du guide de lumière 4 qui a la forme d'une lame de microscope analogue à la précédente, mais ne comportant pas de diffuseur.

Selon ce montage, comme on le voit, on dispose le photodétecteur 10 en vis-à-vis de l'axe d'éclairement $\underline{x}$ de la source de lumière 72. Ainsi, on obtient le spectre du rayonnement lumineux transmis par l'éosine, et par l'épaisseur de la lame de verre, sans diffusion.

Les spectres en longueur d'onde réalisés sont représentés sur la figure 12.

Il s'agit de spectres normalisés par rapport à leur signal d'intensité maximum. En abscisses, on a porté la longueur d'onde $\lambda$ (en nm) et en ordonnées, on a porté la transmission T.

On peut voir que la déviation par le diffuseur (dispositif de la figure 10A), correspondant à la courbe I de la figure 12, ne modifie pas le spectre de la lumière transmise par le plot (dispositif de la figure 10B), correspondant à la courbe II de la figure 12.

**Revendications**

1.  Dispositif de mesure optique d'un matériau, comprenant :

    - un support transparent (4, 34), comportant au moins une zone ($z_1$, $z_2$, $z_3$), cette zone étant destinée à être disposée en vis-à-vis d' un plot comportant un matériau,
    - une source lumineuse ($2_1$, $2_2$, $2_3$ ; $24_1$, $24_2$, $24_3$) associée à ladite zone, ladite source lumineuse étant prévue pour émettre de la lumière selon un axe (X), en direction de la zone à laquelle elle est associée, le matériau que comporte le plot interagissant avec la lumière qu'il reçoit de ladite source lumineuse, et
    - un guide de lumière (4) pour transporter une partie de la lumière émise par le plot, sous l'effet de l'éclairement par la source lumineuse, le guide de lumière comprenant un diffuseur de lumière ($12_1$, $12_2$, $12_3$) associé à ladite source lumineuse, ledit diffuseur étant apte à faire pénétrer, dans ledit guide de lumière, une partie de la lumière émise par le plot, de telle sorte qu'elle soit guidée selon une direction perpendiculaire à l'axe (X) de la lumière émise par ladite source lumineuse,

    **caractérisé en ce que** le diffuseur($12_1$, $12_2$, $12_3$) a une forme annulaire et délimite ainsi une zone (58) du guide de lumière (4), et **en ce que** l'aire de la zone du guide de lumière est supérieure ou égale à l'aire de la section transversale du faisceau lumineux arrivant sur ce diffuseur ($12_1$, $12_2$, $12_3$) si le plot ne diffuse pas.

2.  Dispositif selon la revendication 1, dans lequel le guide de lumière (4) est multimode.

3.  Dispositif selon l'une quelconque des revendications 1 et 2, comprenant une pluralité de plots.

4.  Dispositif selon l'une quelconque des revendications 1 à 3, comprenant en outre un photodétecteur (10) pour détecter la lumière transportée par le guide de lumière (4), ce photodétecteur étant placé face à la tranche du guide de lumière.

5.  Dispositif selon l'une quelconque des revendications 1 à 4, dans lequel l'épaisseur du guide de lumière (4) est comprise dans l'intervalle allant de 50 $\mu$m à 10 mm, de préférence de 500 $\mu$m à 5 mm.

6.  Dispositif selon l'une quelconque des revendications 1 à 5, dans lequel le diffuseur ($12_1$, $12_2$, $12_3$) est disposé, au moins en partie, sur la face du guide de lumière la plus proche du matériau.

7.  Dispositif selon l'une quelconque des revendications 1 à 6, dans lequel le diffuseur ($12_1$, $12_2$, $12_3$) est constitué par une zone rugueuse superficielle du guide de lumière (4), dont la rugosité arithmétique est comprise dans l'intervalle allant de 100 nm à 50 $\mu$m.

8.  Dispositif selon l'une quelconque des revendications 1 à 7, dans lequel le guide de lumière multimode constitue le support transparent (4) et comporte ainsi la zone destinée à recevoir le plot, cette zone étant placée en regard du diffuseur ($12_1$, $12_2$, $12_3$).

9. Dispositif selon l'une quelconque des revendications 1 à 8, comprenant une source de lumière principale (22) et au moins un élément optique à transparence variable ($24_1$, $24_2$, $24_3$) qui est apte à recevoir la lumière de la source de lumière principale et à constituer alors la source lumineuse.

10. Dispositif selon l'une quelconque des revendications 1 à 9, comportant une pluralité de matériaux destinés à être éclairés, de préférence successivement, par une source lumineuse, chaque matériau étant alors associé à un diffuseur ($12_1$, $12_2$, $12_3$) qui permet de dévier, dans le guide de lumière (4), la lumière émise par le matériau sous l'effet de l'éclairement par la source.

11. Dispositif selon l'une quelconque des revendications 1 à 10, comprenant une pluralité de matériaux et en outre un ensemble de puits ($38_1$, $38_2$, $38_3$ ; $44_1$, $44_2$, $44_3$) qui sont respectivement destinés à recevoir les matériaux, chaque puits étant placé en regard d'un diffuseur ($12_1$, $12_2$, $12_3$).

**Patentansprüche**

1. Vorrichtung zur optischen Messung eines Materials, umfassend :

- einen transparenten Träger (4, 34) mit wenigstens einer Zone ($z_1$, $z_2$, $z_3$), wobei diese Zone dazu bestimmt ist, gegenüber einem ein Material umfassenden Knopf angeordnet zu sein,
- eine der genannten Zone zugeordnete Lichtquelle ($2_1$, $2_2$, $2_3$ ; $24_1$, $24_2$, $24_3$), wobei die genannte Lichtquelle dazu vorgesehen ist, Licht gemäß einer Achse (X) in Richtung der Zone abzustrahlen, der sie zugeordnet ist, wobei das Material, welches der Knopf enthält, mit dem Licht interagiert, das er von der genannten Lichtquelle erhält, und
- einen Lichtleiter (4), um einen Teil des durch der Knopf unter der Einwirkung der Beleuchtung durch die Lichtquelle abgestrahlten Lichts zu übertragen, wobei der Lichtleiter einen der genannten Lichtquelle zugeordneten Lichtdiffusor ($12_1$, $12_2$, $12_3$) umfasst und dieser Diffusor fähig ist, einen Teil des von dem Knopf abgestrahlten Lichts in den genannten Lichtleiter einzuspeisen, so dass es gemäß einer zu der Achse (X) des durch die genannte Lichtquelle abgestrahlten Lichts senkrechten Richtung geleitet wird,

**dadurch gekennzeichnet, dass** der Diffusor ($12_1$, $12_2$, $12_3$) ringförmig ist und so eine Zone (58) des Lichtleiters (4) begrenzt, und dadurch, dass der Flächeninhalt der Zone des Lichtleiters größer oder gleich dem Flächeninhalt des Querschnitts des auf diesem Diffusor ($12_1$, $12_2$, $12_3$) eintreffenden Lichtstrahls ist, wenn der Knopf nicht diffundiert.

2. Vorrichtung nach Anspruch 1, bei der der Lichtleiter multimodal ist.

3. Vorrichtung nach einem der Ansprüche 1 und 2, eine Vielzahl von Knöpfe umfassend.

4. Vorrichtung nach einem der Ansprüche 1 bis 3, der außerdem einen Fotodetektor (10) zum Detektieren des durch den Lichtleiter (4) übertragenen Lichts umfasst, wobei dieser Fotodetektor sich gegenüber der Lichtleiterscheibe befindet.

5. Vorrichtung nach einem der Ansprüche 1 bis 4, bei der die Dicke des Lichtleiters (4) enthalten ist in dem Intervall zwischen von 50 $\mu$m bis 10 mm, vorzugsweise von 500 $\mu$m bis 5 mm.

6. Vorrichtung nach einem der Ansprüche 1 bis 5, bei der der Diffusor ($12_1$, $12_2$, $12_3$) wenigstens teilweise auf der Seite des Lichtleiters angeordnet ist, die dem Material am nächsten ist.

7. Vorrichtung nach einem der Ansprüche 1 bis 6, bei der der Diffusor ($12_1$, $12_2$, $12_3$) durch eine raue Oberflächenzone des Lichtleiters (4) gebildet wird, deren arithmetische Rauigkeit in dem Intervall von 100 nm bis 50 $\mu$m enthalten ist.

8. Vorrichtung nach einem der Ansprüche 1 bis 7, bei der der multimodale Lichtleiter (4) den transparenten Träger (4) bildet und so die zur Aufnahme des Knöpfes bestimmte Zone umfasst, wobei diese Zone sich gegenüber dem Diffusor ($12_1$, $12_2$, $12_3$) befindet.

9. Vorrichtung nach einem der Ansprüche 1 bis 8, umfassend eine Hauptlichtquelle (22) und mindestens ein optisches Element mit veriabler Transparenz ($24_1$, $24_2$, $24_3$), das fähig ist, das Licht der Hauptlichtquelle zu empfangen und dann die Lichtquelle zu bilden.

10. Vorrichtung nach einem der Ansprüche 1 bis 9, die eine Vielzahl von Materialien umfasst, die dazu bestimmt sind, vorzugsweise sukzessiv, durch eine Lichtquelle beleuchtet zu werden, wobei dann jedes Material einem Diffusor ($12_1$, $12_2$, $12_3$) zugeordnet ist, der ermöglicht, das durch das Material unter der Wirkung der Beleuchtung durch die Quelle abgestrahlte Licht in den Lichtleiter (4) abzulenken.

11. Vorrichtung nach einem der Ansprüche 1 bis 10, die eine Vielzahl von Materialien umfasst und außerdem eine bestimmte Anzahl von Schächten ($38_1$, $38_2$, $38_3$ ; $44_1$, $44_2$, $44_3$) umfasst, die jeweils dazu bestimmt sind, Materialien aufzunehmen, wobei jeder Schacht gegenüber einem Diffusor ($12_1$, $12_2$, $12_3$) angeordnet ist.

**Claims**

1. A device for optical measurement of a material, including:

   - a transparent support (4, 34), including at least one zone ($z_1$, $z_2$, $z_3$), where this zone is intended to be positioned opposite a dot including a material,
   - a light source ($2_1$, $2_2$, $2_3$; $24_1$, $24_2$, $24_3$) associated with the said zone, where the light source is designed to emit light along an axis (X), in the direction of the zone with which it is associated, where the material that the dot includes interacts with the light it receives from the said light source, and
   - a light guide (4) to convey a proportion of the light emitted by the dot, under the effect of illumination by the light source,

   wherein the light guide includes a light scatterer ($12_1$, $12_2$, $12_3$) associated with the said light source, where the said scatterer is able to cause a proportion of the light emitted by the dot to penetrate into the said light guide, such that it is guided in a direction perpendicular to the axis (X) of the light emitted by the said light source, **characterized in that** the scatterer ($12_1$, $12_2$, $12_3$) has an annular shape, and thus delimits a zone (58) of the light guide (4), and **in that** the area of the zone of the light guide is greater than or equal to the area of the cross-section of the light beam incident to this scatterer ($12_1$, $12_2$, $12_3$) if the dot does not diffuse.

2. A device according to claim 1, in which the light guide (4) is multi-mode.

3. A device according to claim 1, including a plurality of dots.

4. A device according to any one of claims 1 to 3, also including a photodetector (10) to detect the light conveyed by the light guide (4), where this photodetector is positioned opposite the edge of the light guide.

5. A device according to any one of claims 1 to 4, wherein the thickness of the light guide (4) is in a range of 50 $\mu$m to 10 mm, and preferably of 500 $\mu$m to 5 mm.

6. A device according to any one of claims 1 to 5, wherein the scatterer ($12_1$, $12_2$, $12_3$) is positioned, at least partly, on the face of the light guide closest to the material.

7. A device according to any one of claims 1 to 6, wherein the scatterer ($12_1$, $12_2$, $12_3$) consists of a surface rough zone of the light guide (4), the arithmetic roughness of which is in a range of 100 nm to 50 $\mu$m.

8. A device according to any one of claims 1 to 7, in which the multi-mode light guide constitutes the transparent support (4) and thus includes the zone intended to receive the dot, where this zone is positioned opposite the scatterer ($12_1$, $12_2$, $12_3$).

9. A device according to any one of claims 1 to 8, including a main light source (22) and at least one optical element ($24_1$, $24_2$, $24_3$) of variable transparency which is able to receive the light from the main light source and then to constitute the light source.

10. A device according to any one of claims 1 to 9, including a plurality of materials intended to be illuminated, preferably in succession, by a light source, where each material is then associated with a scatterer ($12_1$, $12_2$, $12_3$) which enables the light emitted by the material under the effect of the illumination by the source to be deflected in the light guide.

11. A device according to any one of claims 1 to 10, including a plurality of materials and also a set of pits ($38_1$, $38_2$, $38_3$, $44_1$, $44_2$, $44_3$) which are intended respectively to receive the materials, where each pit is positioned opposite a scatterer ($12_1$, $12_2$, $12_3$).

FIG. 1A

FIG. 1B

## FIG. 2

## FIG. 3

FIG. 4

FIG. 5

FIG. 6

FIG. 7A

FIG. 7B

FIG. 8A

FIG. 8B

FIG. 9A

FIG. 9B

FIG. 10A

FIG. 10B

FIG. 11

FIG. 12

## RÉFÉRENCES CITÉES DANS LA DESCRIPTION

**Documents brevets cités dans la description**

- WO 2006135306 A
- US 20040008393 A
- WO 2007031657 A
- US 7064893 B, Boutet

**Littérature non-brevet citée dans la description**

- **E. SCHULTZ et al.** *Biosensors and Bioelectronics,* 2008, vol. 23, 987-994
- **R. DAGNELIE et al.** Méthodes de mesure du formaldéhyde dans l'atmosphère. *Revue Air Pur N° 74,* 14-21
- **J.M. ELSON et al.** Relationship of the total integrated scattering from multilayercoated optics to angle of incidence, polarization, correlation-length, and roughness crosscorrelationproperties. *Appl.Opt.,* 1983, vol. 22, 3207